(19) Europäisches Patentamt
European Patent Office
Office européen des brevets

(11) **EP 3 794 046 B1**

(12) **EUROPEAN PATENT SPECIFICATION**

(45) Date of publication and mention of the grant of the patent:
**08.03.2023 Bulletin 2023/10**

(21) Application number: **19723433.9**

(22) Date of filing: **16.05.2019**

(51) International Patent Classification (IPC):
***C08F 214/22*** *(2006.01)* ***C08J 5/18*** *(2006.01)*
***C08F 220/06*** *(2006.01)* ***C08F 220/20*** *(2006.01)*

(52) Cooperative Patent Classification (CPC):
**C08F 214/222; C08F 214/225; C08J 5/18;**
C08F 220/06; C08F 220/20; C08J 2327/16

(86) International application number:
**PCT/EP2019/062552**

(87) International publication number:
**WO 2019/219789 (21.11.2019 Gazette 2019/47)**

(54) **FLEXIBLE VDF POLYMERS**

FLEXIBLE VDF-POLYMERE

POLYMÈRES DE VDF FLEXIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2018 EP 18305616**

(43) Date of publication of application:
**24.03.2021 Bulletin 2021/12**

(73) Proprietor: **Solvay Specialty Polymers Italy S.p.A.**
**20021 Bollate (MI) (IT)**

(72) Inventors:
- **BRUSSEAU, Ségolène**
  **39500 Tavaux (FR)**
- **ABUSLEME, Julio A.**
  **21047 Saronno VA (IT)**

(74) Representative: **Benvenuti, Federica et al**
**Solvay S.A.**
**Intellectual Assets Management**
**Rue de Ransbeek, 310**
**1120 Bruxelles (BE)**

(56) References cited:
**EP-A1- 3 075 799**
**WO-A1-2018/114753**
**WO-A1-2018/114779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 794 046 B1

## Description

### Technical Field

The present invention pertains to films made of vinylidene fluoride copolymers comprising recurring units derived from hydrophilic (meth)acrylic monomers and from perfluoroalkylvinylether monomers having improved flexibility, to a process for their manufacture, and to their use in applications where outstanding flexibility is required.

### Background Art

Fluoropolymers are known in the art to be excellent materials used in a variety of applications and environments due to their intrinsic chemical resistance and good mechanical properties.

Thermoplastic fluoropolymers can be extruded or solution casted to form films that can be used for example in lithium ion batteries as binder for the electrodes and for the separator.

Examples of such fluorinated polymeric materials are polyvinylidene fluoride homopolymers (PVDF) and vinylidene fluoride (VDF) copolymer resins, such as poly(vinylidene fluoride-chlorotrifluoroethylene) (VDF-CTFE), poly(vinylidene fluoride-tetrafluoroethylene) (VDF-TFE), poly(vinylidene fluoride-hexafluoropropylene) (VDF-HFP) and poly(vinylidene fluoride-trifluoroethylene) (VDF-TrFE).

VDF copolymers comprising recurring units derived from hydrophilic (meth)acrylic monomers (e.g. acrylic acid) are well known in the art.

EP2147029 (Solvay Specialty Polymers Italy SpA) 30/10/2008, discloses VDF linear copolymers comprising recurring units derived from hydrophilic (meth)acrylic monomers randomly distributed throughout the whole VDF backbone, that is to say, in which the recurring units deriving from the hydrophilic (meth)acrylic monomers are each mainly comprised between two recurring units of VDF monomers; said copolymers exhibit improved thermal stability in comparison with copolymers having an uneven distribution of hydrophilic (meth)acrylic monomers and VDF monomers.

Such copolymers have been developed aiming at adding to the mechanical properties and chemical inertness of VDF homopolymers suitable adhesion towards metals, e.g. aluminium or copper, or hydrophilic properties.

EP3075799 (Solvay Specialty Polymers Italy SpA) 05/10/2016 discloses a terpolymer of at least 85 wt.-% VDF, 0.1 to 10 wt.-% of a fluorinated monomer different from VDF and that can be PMVE, and 0.2 to 3.0 wt.-% of a hydrophilic monomer.

In some recent applications, such as in flexible batteries, fluoropolymer in the form of thin films must be bended several times during the life-time in a given structure or device.

Fluoropolymer films characterized by a very high flexibility while keeping the mechanical properties and the chemical resistance of the fluoropolymer itself are thus needed.

Fluorinated copolymers including recurring units derived from fluorinated olefinic monomers and recurring units derived from perfluoroalkyvinylether units are known in the art, the presence of said perfluoroalkylvinylether units being associated with the improvement of certain properties of the material, thermal stability in particular.

Melt-processable fluoropolymers derived from tetrafluoroethylene and perfluoroalkylvinylethers, which are commonly known in the art for being suitable for manufacturing shaped articles such as pipes, typically comprise from 1% to 5% by moles of recurring units derived from said perfluoroalkylvinylethers.

However, the reactivity of the perfluoroalkylvinylethers is very low and fluorinated copolymers including units derived from fluorinated olefinic monomers and recurring units derived from PAVE monomers are generally obtained with very long reaction times, which is a serious drawback from the industrial point of view.

US 4,487,903 (Daikin Industries Ltd) 29/09/1982, refers to the preparation of fluoroelastomeric copolymers using TFE and perfluoro vinylethers. The reactivity of the described vinyl ethers is very low and the polymer is obtained with very long reaction times (96 hours of polymerization is described in the experimental part).

One aim of the present invention is to provide a VDF-based polymer comprising recurring units derived from hydrophilic (meth)acrylic monomers and recurring units deriving from perfluoroalkylvinylether monomers that can be manufactured in the form of film having good flexible-life, chemical resistance and good adhesion to substrates, and is obtained by a polymerization process having improved productivity.

### Summary of invention

The Applicant has now surprisingly found that when combining in a VDF-based polymer recurring units derived from both a hydrophilic (meth)acrylic monomer and a perfluorinated alkylvinylether in well-defined amounts, it is advantageously possible to significantly improve performances of the VDF-based polymer, in particular in terms of flexibility, while maintaining the good intrinsic mechanical and chemical properties of VDF homopolymers.

Therefore, a first object of the present invention is a film of a vinylidene fluoride (VDF) copolymer [polymer (A)]

comprising:

a) recurring units derived from vinylidene fluoride (VDF);
b) recurring units derived from at least one perfluoroalkylvinylether (PAVE) monomer, wherein the (PAVE) monomer is selected from the group consisting of:

- perfluoroalkylvinylethers complying with formula $CF_2=CFOR_{f1}$, in which $R_{f1}$ is a $C_1$-$C_6$-perfluoroalkyl group; and
- perfluorooxyalkylvinylethers complying with formula $CF_2=CFOR_{OF}$, with $R_{OF}$ being a $C_1$-$C_{12}$-perfluorooxyalkyl, which comprises one or more than one ethereal oxygen atom; and preferably $R_{OF}$ being a group of formula -$CF_2OR_{f2}$ or -$CF_2CF_2OR_{f2}$, with $R_{f2}$ being a $C_1$-$C_6$ perfluoroalkyl; and

c) recurring units derived from at least one hydrophilic (meth)acrylic monomer (MA) of formula (I):

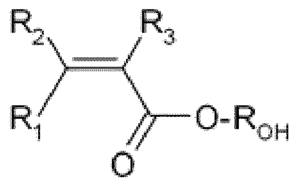

(I)

wherein each of $R_1$, $R_2$, $R_3$, equal or different from each other, is independently an hydrogen atom or a $C_1$-$C_3$ hydrocarbon group, and $R_{OH}$ is a hydrogen or a $C_1$-$C_5$ hydrocarbon moiety comprising at least one hydroxyl group,
wherein the total amount of recurring units b) and c) is at most of 15 % by moles, preferably at most 7% by moles, more preferably at most 4% by moles, with respect to the total moles of recurring units of polymer (A).

The present invention also provides a method for the preparation of a film of polymer (A).

The film of polymer (A) is characterized by improved flex life.

**Description of embodiments**

By the term "recurring unit derived from vinylidene difluoride" (also generally indicated as vinylidene fluoride 1,1-difluoroethylene, VDF), it is intended to denote a recurring unit of formula (I):

$$CF_2=CH_2.$$

Preferred perfluoroalkylvinylethers complying with formula $CF_2=CFOR_{f1}$ include, notably, those wherein $R_{f1}$ is the perfluorinated alkyl group -$CF_3$ (perfluoromethylvinylether (PMVE)), -$C_2F_5$ (perfluoroethylvinylether (PEVE)), -$C_3F_7$ (perfluoropropylvinylether (PPVE)), -$C_4F_9$ or -$C_5F_{11}$ group.

Preferred perfluorooxyalkylvinylether group of complying with formula $CF_2=CFOR_{OF}$ include, notably, those wherein $R_{OF}$ is a perfluorooxyalkyl group of formula -$CF_2OR_{f2}$, with $R_{f2}$ being a $C_1$-$C_3$ perfluoroalkyl group, such as -$CF_2CF_3$ and -$CF_3$.

The recurring units derived from (PAVE) monomer included in polymer (A) of the invention more preferably are recurring units derived from perfluoromethylvinylether (PMVE).

The term "at least one hydrophilic (meth)acrylic monomer (MA)" is understood to mean that the polymer (A) may comprise recurring units derived from one or more than one hydrophilic (meth)acrylic monomer (MA) as above described. In the rest of the text, the expressions "hydrophilic (meth)acrylic monomer (MA)" and "monomer (MA)" are understood, for the purposes of the present invention, both in the plural and the singular, that is to say that they denote both one or more than one hydrophilic (meth)acrylic monomer (MA).

Non-limitative examples of hydrophilic (meth)acrylic monomers (MA) of formula (II) include, notably:

- acrylic acid (AA)
- (meth)acrylic acid,
- hydroxyethyl(meth)acrylate (HEA) ,
- 2-hydroxypropyl acrylate (HPA),
- hydroxyethylhexyl(meth)acrylate,

and mixtures thereof.

The hydrophilic (meth)acrylic monomer (MA) preferably complies with formula (II) here below:

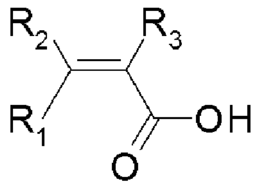

(II)

wherein each of $R_1$, $R_2$ and $R_3$, equal to or different from each other, is independently a hydrogen atom or a $C_1$-$C_3$ hydrocarbon group.

Still more preferably, the hydrophilic (meth)acrylic monomer (MA) is acrylic acid (AA).

The inventors have found that best results are obtained when the polymer (A) is a linear semi-crystalline co-polymer.

The term "linear" is intended to denote a co-polymer made of substantially linear sequences of recurring units from (VDF) monomer, (meth)acrylic monomer and perfluoroalkylvinylether (PAVE); polymer (A) is thus distinguishable from grafted and/or comb-like polymers.

Good results have been obtained when the total amount of recurring units b) and c) in polymer (A) is at most of 15 % by moles, preferably at most 7% by moles, more preferably at most 4% by moles, with respect to the total moles of recurring units of polymer (A).

In a preferred embodiment of the invention, in polymer (A) recurring units deriving from the hydrophilic (meth)acrylic monomer (MA) of formula (I) are comprised in an amount of from 0.05% to 2% by moles, preferably from 0.1 to 1.8% by moles, more preferably from 0.2 to 1.5 % by moles with respect to the total moles of recurring units of polymer (A).

Recurring units deriving from (PAVE) monomer are preferably comprised in in polymer (A) in an amount of from 0.05 to 10 % by moles, preferably from 0.1 to 7% by moles, more preferably from 0.2 to 3.8 % by moles with respect to the total moles of recurring units of polymer (A).

In a more preferred embodiment of the invention, in polymer (A) recurring units deriving from the hydrophilic (meth)acrylic monomer (MA) of formula (I) are comprised in an amount of from 0.2 to 1.5 % by moles with respect to the total moles of recurring units of polymer (A), and recurring units deriving from the (PAVE) monomer is comprised in an amount of from 0.2 to 3.8 % by moles with respect to the total moles of recurring units of polymer (A).

Determination of average mole percentage of monomer (MA) monomer (PAVE) and VDF recurring units in polymer (A) can be performed by any suitable method, NMR being preferred.

The polymer (A) may further comprise recurring units derived from one or more fluorinated comonomers (F) different from the perfluoroalkylvinylether as defined above.

By the term "fluorinated comonomer (F)", it is hereby intended to denote an ethylenically unsaturated comonomer comprising at least one fluorine atoms.

Non-limitative examples of suitable fluorinated comonomers (F) include, notably, the followings:

(a) $C_2$-$C_8$ fluoro- and/or perfluoroolefins such as tetrafluoroethylene (TFE), hexafluoropropylene (HFP), pentafluoropropylene and hexafluoroisobutylene;

(b) $C_2$-$C_8$ hydrogenated monofluoroolefins, such as vinylidene fluoride (VDF), vinyl fluoride; 1,2-difluoroethylene and trifluoroethylene;

(c) perfluoroalkylethylenes of formula $CH_2$=CH-$R_{f0}$, wherein $R_{f0}$ is a $C_1$-$C_6$ perfluoroalkyl group;

(d) chloro- and/or bromo- and/or iodo-$C_2$-$C_6$ fluoroolefins such as chlorotrifluoroethylene (CTFE).

Should one or more fluorinated comonomers (F) be present, the polymer (A) comprises typically from 0.1 to 10% by moles, preferably from 0.3 to 5% by moles, more preferably from 0.5 to 3% by moles of recurring units derived from said fluorinated comonomer (F).

Nevertheless, embodiments wherein the polymer (A) is free from said additional comonomers (F) are preferred.

In a preferred embodiment of the invention, the hydrophilic (meth)acrylic monomer (MA) is a hydrophilic (meth)acrylic monomer of formula (II), still more preferably it is acrylic acid (AA), and the (PAVE) monomer is PMVE, and polymer (A) is a VDF-AA-PMVE terpolymer.

In a preferred embodiment of the invention, the intrinsic viscosity of polymer (A), measured in dimethylformamide at 25 °C, is comprised between 0.20 l/g and 0.60 l/g, preferably between 0.25 l/g and 0.50 l/g, more preferably between 0.25 g/l and 0.35 g/l

Preferably, the intrinsic viscosity of polymer (A), measured in dimethylformamide at 25°C, is of about 0.30 l/g.

Excellent results have been obtained using a polymer (A) consisting essentially of:

- from 0.2 to 1.5 % by moles with respect to the total moles of recurring units of polymer (A) of recurring units derived from monomer (MA),
- from 0.2 to 3.8 % by moles with respect to the total moles of recurring units of polymer (A) of recurring units derived from (PAVE) monomer; and
- from 94.7% to 99.6% by weight, more preferably 96.0% to 98.3% by weight of recurring units derived from VDF.

It is understood that chain ends, defects or other impurity-type moieties might be comprised in the polymer (A) without these impairing its properties.

The polymer (A) is typically obtainable by emulsion polymerization or suspension polymerization of a VDF monomer, at least one hydrogenated (meth)acrylic monomer (MA), at least one monomer (PAVE) and optionally at least one comonomer (F), according to the procedures described, for example, in WO 2007/006645 and in WO 2007/006646.

The polymerization reaction is generally performed at temperatures of between 25 and 150°C, at a pressure of up to 130 bar.

Polymer (A) is typically provided in the form of powder.

The process of the invention provides polymer (A) wherein the monomer (MA) has a substantially random distribution throughout the whole VDF backbone of the polymer (A).

The Applicant has surprisingly found that when combining VDF with recurring units derived from both a hydrophilic (meth)acrylic monomer (MA) and a perfluoroalkylvinylether (PAVE) the productivity of the polymerization is significantly improved, leading to polymer (A) in shorter time.

It is known that longer polymerization time leads to a dirtier reactor at least when polymerizing in suspension, which is an important issue when industrialization takes place.

Data provided in the examples well demonstrate that the introduction of recurring units derived from (MA) monomer and (PAVE) monomer as above specified enables the optimization of flexibility properties (flex-life) of VDF-based polymer while improving the productivity of the polymerization in comparison with polymerization wherein recurring units derived from (PAVE) monomer are not present.

Flexible films of polymer (A) can be obtained by processing polymer (A), said films being flexible enough to be used in applications where outstanding flexibility is required, such as in products which undergo dynamic flexing at low temperatures.

The present invention thus provides a film of polymer (A), said film being characterized by improved flex life.

As used herein, a "flexible" product, such as a flexible film, is a solid non-rigid object having a shape that is adjustable with no more than hand force to produce the shape change.

Suitably, the film of polymer (A) has a thickness comprised between 5 and 500 micrometers.

The film of polymer (A) may be prepared by processing polymer (A) by casting a composition comprising polymer (A) onto an inert support or by compression moulding polymer (A) at a temperature of at least 200°C between two foils of an inert support.

It has been found that the presence of both recurring units derived hydrophilic (meth)acrylic monomers and from perfluoroalkylvinylether monomers in the polymer (A) of the present invention is also associated with the improvement of adhesion to metals of the VDF-based copolymers.

In a preferred embodiment, the film of polymer (A) may be prepared by compression moulding between two foils of polyimide at a temperature of about 250°C.

The invention will be now described in more detail with reference to the following examples, whose purpose is merely illustrative and not limitative of the scope of the invention.

## EXPERIMENTAL PART

### Raw materials

Polymer (C1): VDF-AA (1.0% by moles) polymer having an intrinsic viscosity of 0.30 l/g in DMF at 25°C.

Polymer (A-1): VDF-AA (1.0% by moles)-PMVE (1.7% by moles) polymer having an intrinsic viscosity of 0.294 l/g in DMF at 25°C.

Polymer (A-2): VDF-AA (0.9% by moles)-PMVE (0.6% by moles) polymer having an intrinsic viscosity of 0.31 l/g in DMF at 25°C.

Initiator agent: t-amyl-perpivalate in isododecane (a 75% by weight solution of t-amyl perpivalate in isododecane), commercially available from Arkema.

Suspending agent (B): Alcotex AQ38, a 38 g/l solution of Alcotex 80 in water: 80% hydrolyzed high molecular weight polyvinyl alcohol, commercially available from SYNTHOMER.

**Determination of intrinsic viscosity of polymer (A)**

Intrinsic viscosity (η) [dl/g] was measured using the following equation on the basis of dropping time, at 25°C, of a solution obtained by dissolving the polymer (A) in N,N-dimethylformamide at a concentration of about 0.2 g/dl using a Ubbelhode viscosimeter:

$$[\eta] = \frac{\eta_{sp} + \Gamma \cdot \ln \eta_r}{(1+\Gamma) \cdot c}$$

where c is polymer concentration [g/dl], $\eta_r$ is the relative viscosity, i.e. the ratio between the dropping time of sample solution and the dropping time of solvent, $\eta_{sp}$ is the specific viscosity, i.e. $\eta_r$ -1, and Γ is an experimental factor, which for polymer (F) corresponds to 3.

**DSC analysis**

DSC analyses were carried out according to ASTM D 3418 standard; the melting point ($T_{f2}$) was determined at a heating rate of 10°C/min.

**EXAMPLE 1: General procedure for the preparation of polymer (A) and (C1):**

In a 4 litres reactor equipped with an impeller running at a speed of 650 rpm were introduced in sequence of demineralised water and 1.5 g/kg Mni (initial of monomers added in reactor before the set point temperature) of suspending agent. The reactor was purged with sequence of vacuum (30 mmHg) and purged of nitrogen at 11°C. Then 5.0 g of initiator agent were introduced. At a speed of 880 rpm, the acrylic acid (AA) and the perfluoromethyl vinyl ether (PMVE) were introduced. Finally, the vinylidene fluoride (VDF) was introduced in the reactor. The amounts of AA, PMVE and VDF in the polymers (A) used in the preparation of the polymer (A) according to the invention (and in the comparative polymer (C1)) are reported in Table 1. The reactor was gradually heated until a set-point temperature at 55°C and the pressure was fixed at 120 bar. The pressure was kept constantly equal to 120 bar by feeding during the polymerization, the acrylic acid in aqueous solution with a concentration of AA as described in the table B. After this feeding, no more aqueous solution was introduced and the pressure started to decrease. The polymerization was stopped by degassing the reactor until reaching atmospheric pressure. A conversion of monomers was reached as described in Table A. The polymer so obtained was then recovered, washed with demineralised water and dried at 65°C during all the night.

**Table 1**

| Polymers | Water g | VDF g | PMVE g | AA Initial g | AA feeding g ([AA] in water g/kg water) |
|---|---|---|---|---|---|
| (C1) | 1997 | 1280 | 0 | 0.55 | 13.55 (14.9) |
| (A-1) | 2055 | 1216 | 66 | 0.55 | 13.55 (15.8) |
| (A-2) | 2030 | 1256 | 25 | 0.55 | 13.55 (15.3) |

In Table 2 the time and yield of polymerizations and the properties of the obtained polymers are reported.

**Table 2**

| | Time of polymerization Minutes * | Yield % | η in DMF at 25°C l/g | Tf2 °C | NMR composition (mol%) | | |
|---|---|---|---|---|---|---|---|
| | | | | | VDF | PMVE | AA |
| (C1) | 392 | 78 | 0.30 | 162.7 | 99.0 | - | 1.0 |
| (A-1) | 360 | 76 | 0.294 | 150 | 97.3 | 1.7 | 1.0 |
| (A-2) | 343 | 77 | 0.31 | 157.5 | 98.5 | 0.6 | 0.9 |
| * Time between the startup (Temperature of polymerization (55°C) and the start of the reactor degassing | | | | | | | |

**EXAMPLE 2: General procedure for the preparation of films** The polymer was compression moulded between two aluminium foils at a temperature of 240°C to produce a film of about 300 microns thickness.

**EXAMPLE 3: M.I.T. Flex Life measurement of polymer (A)**

The films of polymers prepared as described in Example 1 were tested in a M.I.T machine (Folding Indurance Tester from Tinius Olsen, testing machine Co, Willow Growe, (PA)) at 23°C at a speed of 90 cycles/min with a weight of 2 lbs. The test was considered over when the sample broke.

The value of MIT Flex life is an average of the values obtained by testing at least three films for each polymer.

In Table 3 the data of flex life for the three polymers C1, A-1 and A-2 are reported.

**Table 3**

| Film of polymer | Flex life N° cycles up to break |
|---|---|
| (C1) | 5349 |
| (A-1) | 21319 |
| (A-2) | 9419 |

As shown in Table 3, films made of the polymer (A) as notably embodied by any of the polymers (A-1) and (A-2), advantageously exhibit higher flex life in comparison with the comparative polymer (C1).

In view of the above, it has been found that films of the polymer (A) are particularly suitable for use in applications where outstanding flexibility is required.

## Claims

**1.** A film of a vinylidene fluoride (VDF) polymer (A) comprising:

a. recurring units derived from vinylidene fluoride (VDF);
b. recurring units derived from at least one perfluoroalkylvinylether (PAVE) monomer, wherein the (PAVE) monomer is selected from the group consisting of:

- perfluoroalkylvinylethers complying with formula $CF_2$=$CFOR_{f1}$ in which $R_{f1}$ is a $C_1$-$C_6$-perfluoroalkyl group; and
- perfluorooxyalkylvinylethers complying with formula $CF_2$=$CFOR_{OF}$, with $R_{OF}$ being a $C_1$-$C_{12}$-perfluorooxyalkyl, which comprises one or more than one ethereal oxygen atom; and preferably $R_{OF}$ being a group of formula - $CF_2OR_{f2}$ or -$CF_2CF_2OR_{f2}$, with $R_{f2}$ being a $C_1$-$C_6$ perfluoroalkyl; and

c. recurring units derived from at least one hydrophilic (meth)acrylic monomer (MA) of formula (I):

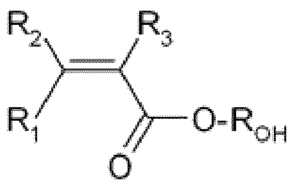

(I)

wherein each of $R_1$, $R_2$, $R_3$, equal or different from each other, is independently an hydrogen atom or a $C_1$-$C_3$ hydrocarbon group, and $R_{OH}$ is a hydrogen or a $C_1$-$C_5$ hydrocarbon moiety comprising at least one hydroxyl group, wherein the total amount of recurring units b) and c) is at most of 15 % by moles, preferably at most 7% by moles, more preferably at most 4% by moles, with respect to the total moles of recurring units of polymer (A).

**2.** The film of polymer (A) according to claim 1 wherein the at least one hydrophilic (meth)acrylic monomers (MA) of formula (I) is selected from the group comprising acrylic acid (AA), (meth)acrylic acid, hydroxyethyl(meth)acrylate (HEA), 2-hydroxypropyl acrylate (HPA), hydroxyethylhexyl(meth)acrylate, and mixtures thereof.

3. The film of polymer (A) according to claim 1 wherein the perfluoroalkylvinylether (PAVE) is selected from the group comprising perfluoromethylvinylether (PMVE), perfluoroethylvinylether (PEVE) and perfluoropropylvinylether (PPVE).

4. The film of polymer (A) according to anyone of the preceding claims that is a terpolymer VDF-AA-PMVE.

5. The film of polymer (A) according to anyone of the preceding claims having intrinsic viscosity, measured in dimethylformamide at 25 °C, of about 0.30 l/g.

6. The film of polymer (A) according to anyone of the preceding claims wherein the recurring units derived from hydrophilic (meth)acrylic monomer (MA) are comprised in an amount of from 0.05% to 2% by moles, preferably from 0.1 to 1.2% by moles, more preferably from 0.2 to 1.5 % by moles with respect to the total moles of recurring units of polymer (A).

7. The film of polymer (A) according to anyone of the preceding claims wherein the recurring units derived from (PAVE) monomer are comprised in polymer (A) in an amount of from 0.2 to 10 % by moles, preferably from 0.3 to 7% by moles, more preferably from 0.2 to 3.8 % by moles with respect to the total moles of recurring units of polymer (A).

8. The film of polymer (A) according to anyone of the preceding claims wherein the recurring units derived from the hydrophilic (meth)acrylic monomer (MA) are comprised in an amount of from 0.2 to 1.5 % by moles with respect to the total moles of recurring units of polymer (A), and the (PAVE) monomer is comprised in an amount of from 0.2 to 3.8 % by moles with respect to the total moles of recurring units of polymer (A).

9. The film of polymer (A) according to anyone of the preceding claims consisting essentially of:

- from 0.2 to 1.5 % by moles with respect to the total moles of recurring units of polymer (A) of recurring units derived from monomer (MA),
- from 0.2 to 3.8 % by moles with respect to the total moles of recurring units of polymer (A) of recurring units derived from (PAVE) monomer; and
- from 94.7% to 99.6% by weight, more preferably 96.0% to 98.3% by weight of recurring units derived from VDF.

10. The film of polymer (A) according to anyone of the preceding claims having a thickness of from 5 to 500 micrometers.

11. A process for the preparation of the film according to according to anyone of the preceding claims, said process comprising casting a composition comprising polymer (A).

12. The process of Claim 11, said process comprising compression molding polymer (A) at a temperature of at least 200°C between two foils of an inert support.

**Patentansprüche**

1. Film aus einem Vinylidenfluorid(VDF)-Polymer (A), umfassend:

a. Wiederholungseinheiten, die sich von Vinylidenfluorid (VDF) ableiten;
b. Wiederholungseinheiten, die sich von mindestens einem Perfluoralkylvinylether(PAVE)-Monomer ableiten, wobei das (PAVE)-Monomer aus der Gruppe bestehend aus

- Perfluoralkylvinylethern, die der Formel $CF_2$=$CFOR_{f1}$ entsprechen, in der $R_{f1}$ für eine $C_1$-$C_6$-Perfluoralkylgruppe steht; und
- Perfluoralkylvinylethern, die der Formel $CF_2$=$CFOR_{OF}$ entsprechen, wobei $R_{OF}$ für ein $C_1$-$C_{12}$-Perfluoroxyalkyl steht, das ein oder mehr als ein etherisches Sauerstoffatom umfasst, und vorzugsweise $R_{OF}$ für eine Gruppe der Formel - $CF_2OR_{f2}$ oder -$CF_2CF_2OR_{f2}$ steht, wobei $R_{f2}$ für ein $C_1$-$C_6$-Perfluoralkyl steht;

ausgewählt ist; und
c. Wiederholungseinheiten, die sich von mindestens einem hydrophilen (Meth)acryl-Monomer (MA) der Formel (I):

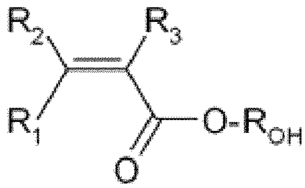

(I)

worin $R_1$, $R_2$ und $R_3$ jeweils gleich oder voneinander verschieden sind und unabhängig voneinander für ein Wasserstoffatom oder eine $C_1$-$C_3$-Kohlenwasserstoffgruppe stehen und $R_{OH}$ für Wasserstoff oder eine $C_1$-$C_5$-Kohlenwasserstoff-gruppierung mit mindestens einer Hydroxylgruppe steht, ableiten,

wobei die Gesamtmenge von Wiederholungseinheiten b) und c) höchstens 15 Mol-%, vorzugsweise höchstens 7 Mol-%, weiter bevorzugt höchstens 4 Mol-%, bezogen auf die gesamten Mole von Wiederholungseinheiten von Polymer (A), beträgt.

2. Film aus Polymer (A) nach Anspruch 1, wobei das mindestens eine hydrophile (Meth)acryl-Monomer (MA) der Formel (I) aus der Gruppe umfassend Acrylsäure (AA), (Meth)acrylsäure, Hydroxyethyl(meth)acrylat (HPA), 2-Hydroxypropylacrylat (HPA), Hydroxyethylhexyl(meth)acrylat und Mischungen davon ausgewählt ist.

3. Film aus Polymer (A) nach Anspruch 1, wobei der Perfluoralkylvinylether (PAVE) aus der Gruppe umfassend Perfluormethylvinylether (PMVE), Perfluorethylvinylether (PEVE) und Perfluorpropylvinylether (PPVE) ausgewählt ist.

4. Film aus Polymer (A) nach einem der vorhergehenden Ansprüche, wobei es sich um ein Terpolymer VDF-AA-PMVE handelt.

5. Film aus Polymer (A) nach einem der vorhergehenden Ansprüche mit einer in Dimethylformamid bei 25 °C gemessenen intrinsischen Viskosität von etwa 0,30 l/g.

6. Film aus Polymer (A) nach einem der vorhergehenden Ansprüche, wobei die Wiederholungseinheiten, die sich von dem hydrophilen (Meth)acryl-Monomer (MA) ableiten, in einer Menge von 0,05 bis 2 Mol-%, vorzugsweise von 0,1 bis 1,2 Mol-%, weiter bevorzugt von 0,2 bis 1,5 Mol-%, bezogen auf die gesamten Mole von Wiederholungseinheiten von Polymer (A), enthalten sind.

7. Film aus Polymer (A) nach einem der vorhergehenden Ansprüche, wobei die Wiederholungseinheiten, die sich von (PAVE)-Monomer ableiten, in dem Polymer (A) in einer Menge von 0,2 bis 10 Mol-%, vorzugsweise von 0,3 bis 7 Mol-%, weiter bevorzugt von 0,2 bis 3,8 Mol-%, bezogen auf die gesamten Mole von Wiederholungseinheiten von Polymer (A), enthalten sind.

8. Film aus Polymer (A) nach einem der vorhergehenden Ansprüche, wobei die Wiederholungseinheiten, die sich von dem hydrophilen (Meth)acryl-Monomer (MA) ableiten, in einer Menge von 0,2 bis 1,5 Mol-%, bezogen auf die gesamten Mole von Wiederholungseinheiten von Polymer (A), enthalten sind und das (PAVE)-Monomer in einer Menge von 0,2 bis 3,8 Mol-%, bezogen auf die gesamten Mole von Wiederholungseinheiten von Polymer (A), enthalten ist.

9. Film aus Polymer (A) nach einem der vorhergehenden Ansprüche, im Wesentlichen bestehend aus:

- 0,2 bis 1,5 Mol-%, bezogen auf die gesamten Mole von Wiederholungseinheiten von Polymer (A), Wiederholungseinheiten, die sich von Monomer (MA) ableiten,
- 0,2 bis 3,8 Mol-%, bezogen auf die gesamten Mole von Wiederholungseinheiten von Polymer (A), Wiederholungseinheiten, die sich von (PAVE)-Monomer ableiten, und
- 94,7 bis 99,6 Gew.-%, weiter bevorzugt 96,0 bis 98,3 Gew.-%, Wiederholungseinheiten, die sich von VDF ableiten.

10. Film aus Polymer (A) nach einem der vorhergehenden Ansprüche mit einer Dicke von 5 bis 500 Mikrometer.

11. Verfahren zur Herstellung des Films nach einem der vorhergehenden Ansprüche, wobei das Verfahren das Gießen einer Polymer (A) umfassenden Zusammensetzung umfasst.

**12.** Verfahren nach Anspruch 11, wobei das Verfahren das Formpressen von Polymer (A) bei einer Temperatur von mindestens 200 °C zwischen zwei Folien eines inerten Trägers umfasst.

## Revendications

**1.** Film d'un polymère (A) de fluorure de vinylidène (VDF) comprenant :

a. des motifs répétitifs issus du fluorure de vinylidène (VDF) ;
b. des motifs répétitifs issus d'au moins un monomère de perfluoroalkylvinyléther (PAVE), le monomère (PAVE) étant choisi dans le groupe constitué par :

- des perfluoroalkylvinyléthers satisfaisant à la formule $CF_2=CFOR_{f1}$ dans laquelle $R_{f1}$ est un groupe perfluoroalkyle en $C_1$ à $C_6$ ; et
- des perfluorooxyalkylvinyléthers satisfaisant à la formule $CF_2=CFOR_{OF}$ $R_{OF}$ étant un perfluorooxyalkyle en $C_1$ à $C_{12}$, qui comprend un ou plus d'un atome d'oxygène d'éther ; et préférablement $R_{OF}$ étant un groupe de formule - $CF_2OR_{f2}$ ou $-CF_2CF_2OR_{f2}$, $R_{f2}$ étant un perfluoroalkyle en $C_1$ à $C_6$ ; et

c. des motifs répétitifs issus d'au moins un monomère (méth)acrylique hydrophile (MA) de formule (I) :

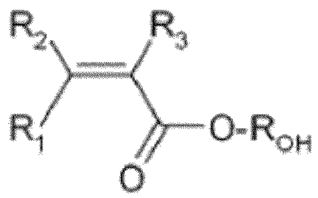

(I)

chacun parmi $R_1$, $R_2$, $R_3$, identiques ou différents les uns des autres, étant indépendamment un atome d'hydrogène ou un groupe hydrocarboné en $C_1$ à $C_3$, et $R_{OH}$ étant un hydrogène ou un groupement hydrocarboné en $C_1$ à $C_5$ comprenant au moins un groupe hydroxyle,

la quantité totale de motifs répétitifs b) et c) étant d'au plus 15 % en moles, préférablement d'au plus 7 % en moles, plus préférablement d'au plus 4 % en moles, par rapport au nombre total de moles de motifs répétitifs du polymère (A).

**2.** Film de polymère (A) selon la revendication 1, l'au moins un monomère (méth)acrylique hydrophile (MA) de formule (I) étant choisi dans le groupe comprenant l'acide acrylique (AA), un acide (méth)acrylique, un (méth)acrylate d'hydroxyéthyle (HEA), l'acrylate de 2-hydroxypropyle (HPA), un (méth)acrylate d'hydroxyéthylhexyle, et des mélanges correspondants.

**3.** Film de polymère (A) selon la revendication 1, le perfluoroalkylvinyléther (PAVE) étant choisi dans le groupe comprenant un perfluorométhylvinyléther (PMVE), un perfluoroéthylvinyléther (PEVE) et un perfluoropropylvinyléther (PPVE).

**4.** Film de polymère (A) selon l'une quelconque des revendications précédentes qui est un terpolymère de VDF-AA-PMVE.

**5.** Film de polymère (A) selon l'une quelconque des revendications précédentes possédant une viscosité intrinsèque, mesurée dans le diméthylformamide à 25 °C, d'environ 0,30 l/g.

**6.** Film de polymère (A) selon l'une quelconque des revendications précédentes, les motifs répétitifs issus d'un monomère (méth)acrylique hydrophile (MA) étant compris en une quantité allant de 0,05 % à 2 % en moles, préférablement de 0,1 à 1,2 % en moles, plus préférablement de 0,2 à 1,5 % en moles par rapport au nombre total de moles de motifs répétitifs du polymère (A).

**7.** Film de polymère (A) selon l'une quelconque des revendications précédentes, les motifs répétitifs issus d'un monomère (PAVE) étant compris dans le polymère (A) en une quantité allant de 0,2 à 10 % en moles, préférablement

de 0,3 à 7 % en moles, plus préférablement de 0,2 à 3,8 % en moles par rapport au nombre total de moles de motifs répétitifs du polymère (A).

**8.** Film de polymère (A) selon l'une quelconque des revendications précédentes, les motifs répétitifs issus du monomère (méth)acrylique hydrophile (MA) étant compris en une quantité allant de 0,2 à 1,5 % en moles par rapport au nombre total de moles de motifs répétitifs du polymère (A), et le monomère (PAVE) étant compris en une quantité allant de 0,2 à 3,8 % en moles par rapport au nombre total de moles de motifs répétitifs du polymère (A).

**9.** Film de polymère (A) selon l'une quelconque des revendications précédentes essentiellement constitué de :

- de 0,2 % à 1,5 % en moles par rapport au nombre total de moles de motifs répétitifs du polymère (A) de motifs répétitifs issus du monomère (MA),
- de 0,2 à 3,8 % en moles par rapport au nombre total de moles de motifs répétitifs du polymère (A) de motifs répétitifs issus du monomère (PAVE) ; et
- de 94,7 % à 99,6 % en poids, plus préférablement 96,0 % à 98,3 % en poids de motifs répétitifs issus du VDF.

**10.** Film de polymère (A) selon l'une quelconque des revendications précédentes possédant une épaisseur allant de 5 à 500 micromètres.

**11.** Procédé pour la préparation du film selon l'une quelconque des revendications précédentes, ledit procédé comprenant la coulée d'une composition comprenant le polymère (A).

**12.** Procédé selon la revendication 11, ledit procédé comprenant un moulage par compression du polymère (A) à une température d'au moins 200 °C entre deux feuilles d'un support inerte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2147029 A
- EP 3075799 A
- US 4487903 A
- WO 2007006645 A
- WO 2007006646 A